# EUROPÄISCHE PATENTSCHRIFT

(11) **EP 2 913 577 B1**
(45) Veröffentlichungstag und Bekanntmachung des Hinweises auf die Patenterteilung: **28.06.2017**
(21) Anmeldenummer: 14200367.2
(22) Anmeldetag: 29.12.2014
(51) Int. Cl.: F16P 1/02

(54) **Abdeckvorrichtung für Öffnungen, insbesondere für Maschinenöffnungen**
Covering device for openings, in particular for machine openings
Dispositif de recouvrement pour ouvertures, plus particulièrement pour ouvertures de machines

(30) Priorität: 11.02.2014 DE 102014202471
(43) Veröffentlichungstag der Anmeldung: 02.09.2015
(73) Patentinhaber: Hennig Holding GmbH, 85551 Kirchheim (DE)
(72) Erfinder: Schönerwald, Kurt, 84186 Vilsheim (DE)
(74) Vertreter: Rau, Schneck & Hübner Patentanwälte Rechtsanwälte PartGmbB

(56) Entgegenhaltungen:
- DE-A1- 19 600 949
- FR-A1- 2 614 929

## Beschreibung

Die Erfindung betrifft eine Abdeckvorrichtung für Öffnungen, insbesondere für Maschinenöffnungen, gemäß dem Oberbegriff des Anspruchs 1.

Aus der DE 10 2012 200 642 A1 ist eine Abdeckvorrichtung bekannt, die eine Wickeleinheit zum Auf- und Abwickeln eines Abdeckelements aufweist. Die Wickeleinheit umfasst einen Wickelkörper und eine Welle, die mittels eines Federelements um eine zugehörige Drehachse gegeneinander vorgespannt sind. Hierzu ist ein erstes Federende mittels eines Lagers drehfest an dem Wickelkörper und ein zweites Federende mittels eines Gegenlagers drehfest an der Welle angeordnet. Um die Belastung des Federelements bei der Auf- und Abwickelbewegung weitestgehend konstant zu halten und eine im Wesentlichen konstante Vorspannkraft zu erzeugen, erfolgt bei einer Drehung des Lagers bzw. des Wickelkörpers auch eine Drehung des Gegenlagers bzw. der Welle. Hierzu ist eine Kopplungsmechanik vorgesehen, die die Auf- und Abwickelbewegung des Abdeckelements mit einer Drehbewegung der Welle bzw. des Gegenlagers koppelt. Dies erfolgt durch ein Endloskoppelelement in Form einer Kette, die über ein Verbindungselement mit dem freien Ende des Abdeckelements verbunden ist und in Eingriff mit einem Zahnrad ist, das drehfest an der Welle angeordnet ist. Durch diese Kopplungsmechanik wird die Linearbewegung des Abdeckelements in eine Drehbewegung der Welle bzw. des Gegenlagers umgewandelt, wodurch das Gegenlager entsprechend dem Wickelkörper bzw. dem Lager gedreht wird.

Nachteilig bei der bekannten Abdeckvorrichtung ist, dass der Aufbau der Kopplungsmechanik kompliziert ist. Dies gilt insbesondere dann, wenn die Abdeckvorrichtung einen großen Abdeckhub haben soll, da sich das Endloskoppelelement bzw. die Kette entlang des gesamten Abdeckhubs erstrecken muss. Darüber hinaus ist bei großen Abdeckhüben die Zuverlässigkeit der Abdeckvorrichtung nicht mehr gewährleistet, da es im Betrieb der Abdeckvorrichtung zu Fehlfunktionen der Kopplungsmechanik, insbesondere des Endloskoppelelements, kommt.

Aus der DE 196 00 949 A1 ist ein Rollladen für Fenster oder Türen bekannt. Der Rollladen weist mehrere gelenkig miteinander verbundene Lamellen auf, die in Führungsschienen geführt sind. Die Lamellen werden auf eine Welle aufgewickelt. Das Auf- und Abwickeln der Lamellen erfolgt mittels manuell oder elektromotorisch angetriebener Antriebszahnräder, die in seitlich an den Lamellen ausgebildeten Ausnehmungen eingreifen.

Aus der FR 2 614 929 A1 ist ein Rollladen für Fenster und Türen bekannt, bei dem ein Antriebszahnrad mit seitlich an den Lamellen angeordneten Stiften zusammenwirkt.

Der Erfindung liegt die Aufgabe zugrunde, eine Abdeckvorrichtung zu schaffen, die einen einfacheren und zuverlässigeren Aufbau aufweist.

Diese Aufgabe wird durch eine Abdeckvorrichtung mit den Merkmalen des Anspruchs 1 gelöst. Die Kopplung der Auf- und Abwickelbewegung des Abdeckelements und der Drehbewegung der Welle erfolgt durch das mindestens eine Koppelrad, das mit seinem umfangsseitigen Profil in ein Gegenprofil eingreift, das an dem Abdeckelement angeordnet ist. Das Gegenprofil erstreckt sich über die Länge des Abdeckhubs entlang der Bewegungsrichtung des Abdeckelements. Das Abdeckelement ist vorzugsweise als Gliederschürze ausgebildet. Das mindestens eine Koppelrad mit dem umfangsseitigen Profil sowie das zugehörige Gegenprofil ersetzt somit das aus dem Stand der Technik bekannte Endloskoppelelement. Der Aufbau der erfindungsgemäßen Abdeckvorrichtung ist somit einfacher und zuverlässiger. Insbesondere können mit dem erfindungsgemäßen Aufbau beliebig große Abdeckhübe realisiert werden, indem auf einfache Weise das Gegenprofil in der Bewegungsrichtung des Abdeckelements verlängert wird. Die Zuverlässigkeit der Abdeckvorrichtung ist somit unabhängig von der Größe des Abdeckhubs. Das mindestens eine Koppelrad ist vorzugsweise benachbart zu der Wickeleinheit angeordnet, wodurch eine einfache Kopplung der Drehbewegung der Welle und des mindestens einen Koppelrads erzielt wird. Das Abdeckelement ist insbesondere schiebesteif. Das bedeutet, dass das Abdeckelement eine schiebende Bewegung ermöglicht.

Eine Abdeckvorrichtung nach Anspruch 2 gewährleistet einen einfachen Aufbau des Gegenprofils. Das Gegenprofil wird durch einzelne Gegenprofilelemente gebildet, die separat voneinander ausgebildet sein. Die Gegenprofilelemente sind mit einem im Wesentlichen konstanten Abstand voneinander an dem Abdeckelement angeordnet. Das bedeutet, dass benachbarte Gegenprofilelemente einen konstanten Abstand voneinander aufweisen. Das mindestens eine Koppelrad hat umfangsseitig Ausnehmungen, die mit ihrer Form und ihrem Abstand den Gegenprofilelementen entsprechen. Dadurch, dass das Gegenprofil durch einzelne Gegenprofilelemente gebildet ist, ist die Länge des Gegenprofils in einfacher Weise an den Abdeckhub anpassbar.

Eine Abdeckvorrichtung nach Anspruch 3 gewährleistet auf einfache Weise eine hohe Zuverlässigkeit. Die Gliederschürze weist eine hohe Eigenstabilität auf, so dass in einfacher Weise eine schiebende Bewegung der Gliederschürze durchführbar ist. Eine schiebende Bewegung erfolgt beispielsweise dann, wenn die Welle von einem Antriebsmotor drehangetrieben wird und das mindestens eine Koppelrad die Drehbewegung in eine schiebende Abwickelbewegung umwandelt. Weiterhin erfolgt eine schiebende Bewegung beispielsweise dann, wenn das freie Ende der Gliederschürze an einem sich bewegenden Bauteil, beispielsweise einer Werkzeugspindel, einer Maschine angeordnet ist und das Bauteil in Richtung der Wickeleinheit bewegt wird, so dass eine schiebende Aufwickelbewegung erfolgt. Darüber hinaus kann die Gliederschürze hohe Druckbelastungen quer zu ihrer Oberfläche aufnehmen, so dass diese insbesondere begehbar ist.

Eine Abdeckvorrichtung nach Anspruch 4 gewährleistet eine einfache Anbringung des Gegenprofils. Die Gegenprofilelemente erstrecken sich seitlich von dem Abdeckelement. Vorzugsweise sind die Gegenprofilelemente stirnseitig an den Gliedern angeordnet, indem diese insbesondere in einem stirnseitig offenen Hohlraum des jeweiligen Gliedes befestigt sind.

Eine Abdeckvorrichtung nach Anspruch 5 gewährleistet eine hohe Zuverlässigkeit. Der Gegenhalter gewährleistet einen sicheren Eingriff von Profil und Gegenprofil. Hierzu verhindert der Gegenhalter, dass das Gegenprofil bei einer Auf- oder Abwickelbewegung sich quer zu der Bewegungsrichtung verlagert und aus dem Profil austritt, so dass der Eingriff nicht mehr gewährleistet ist. Vorzugsweise bildet das mindestens eine Koppelrad und der Gegenhalter einen Spalt aus, in dem das Gegenprofil, insbesondere die Gegenprofilelemente, bereichsweise geführt sind.

Eine Abdeckvorrichtung nach Anspruch 6 gewährleistet einen einfachen Aufbau. Die Gegenprofilelemente dienen auch als Gleitelemente und/oder Rollelemente und/oder Führungselemente, so dass das Abdeckelement entlang des Abdeckhubs mittels der Gegenprofilelemente bewegbar ist. Das Vorsehen von separaten Gleitelementen und/oder Rollelementen und/oder Führungselementen kann somit entfallen. Die Gegenprofilelemente sind zur Erzielung einer reibungsarmen Bewegung bzw. Führung insbesondere aus einem Kunststoffmaterial ausgebildet. Alternativ können die Gegenprofilelemente aus Metall ausgebildet sein und in einer Führung aus Kunststoff gleiten. Zudem können die Gegenprofilelemente als Rollelemente ausgebildet sein, die eine möglichst reibungsarme Bewegung des Abdeckelements gewährleisten. Darüber hinaus können die Gegenprofilelemente auch als Führungselemente ausgebildet sein, die das Abdeckelement führen.

Eine Abdeckvorrichtung nach Anspruch 7 gewährleistet ein zuverlässiges Öffnen und Abdecken der Öffnung. Die Führung weist insbesondere mindestens eine Führungsschiene auf, die im Querschnitt U-förmig ausgebildet ist. Vorzugsweise weist die Führung zwei Führungsschienen auf, die beidseitig des Abdeckelements angeordnet sind und in denen das Abdeckelement mittels der Gegenprofilelemente geführt ist. Die Gegenprofilelemente sind insbesondere als Gleitelemente und/oder Rollelemente und/oder Führungselemente ausgebildet.

Eine Abdeckvorrichtung nach Anspruch 8 gewährleistet in einfacher Weise eine Kopplung des mindestens einen Koppelrads und der Welle. Das Endloskoppelelement ist beispielsweise als Zahnriemen oder Kette ausgebildet. Die Länge des Endloskoppelelements ist unabhängig von dem Abdeckhub und kann äußerst kurz gewählt werden, da lediglich die Drehbewegungen der Welle und des Koppelrads miteinander gekoppelt werden müssen.

Eine Abdeckvorrichtung nach Anspruch 9 gewährleistet eine hohe Zuverlässigkeit, da aus der beidseitigen Kopplung eine gleichmäßige Auf- und Abwickelbewegung resultiert. Die Kopplungsmechanik ist insbesondere beidseitig des Abdeckelements identisch aufgebaut.

Eine Abdeckvorrichtung nach Anspruch 10 gewährleistet einen einfachen Aufbau. Durch das Lager und das Gegenlager wird auf einfache Weise eine drehfeste Verbindung der Enden des Federelements mit dem Wickelkörper bzw. mit der Welle erzielt.

Eine Abdeckvorrichtung nach Anspruch 11 gewährleistet einen einfachen und robusten Aufbau. Das Federelement ist in einem Hohlraum zwischen dem Wickelkörper und der Welle angeordnet. Das Federelement ist durch Torsion vorgespannt. Die Ausbildung als Schraubenfeder ist einfach und robust.

Eine Abdeckvorrichtung nach Anspruch 12 ermöglicht ein selbsttätiges Abdecken und Öffnen der Öffnung. Der Antriebsmotor ist insbesondere mit der Welle gekoppelt, so dass durch die Drehbewegung der drehangetriebenen Welle - je nach Drehrichtung - mittels der Kopplungsmechanik eine Auf- und Abwickelbewegung des Abdeckelements erzeugbar ist. Alternativ kann die Abdeckvorrichtung keinen eigenen Antriebsmotor aufweisen, sondern durch einen externen Antriebsmotor betrieben werden, der eine Auf- und Abwickelbewegung des Abdeckelements bewirkt. Der externe Antriebsmotor ist beispielsweise ein Antriebsmotor einer Produktions- bzw. Werkzeugmaschine, der ein Bauteil der Maschine verlagert, wobei das Bauteil mit dem freien Ende des Abdeckelements gekoppelt ist. Die Auf- und Abwickelbewegung des Abdeckelements wird in diesem Fall mittels der Kopplungsmechanik in eine Drehbewegung der Welle bzw. des Gegenlagers umgewandelt.

Weitere Merkmale, Vorteile und Einzelheiten der Erfindung ergeben sich aus der nachfolgenden Beschreibung mehrerer Ausführungsbeispiele. Es zeigen:
- Fig. 1: eine perspektivische Ansicht einer Abdeckvorrichtung gemäß einem ersten Ausführungsbeispiel,
- Fig. 2: eine frontale Ansicht der Abdeckvorrichtung in Fig. 1,
- Fig. 3: eine Seitenansicht der Abdeckvorrichtung in Fig. 1,
- Fig. 4: einen Axialschnitt durch eine Wickeleinheit der Abdeckvorrichtung entlang der Schnittlinie IV - IV in Fig. 3, und
- Fig. 5: eine perspektivische Ansicht einer Abdeckvorrichtung gemäß einem zweiten Ausführungsbeispiel.

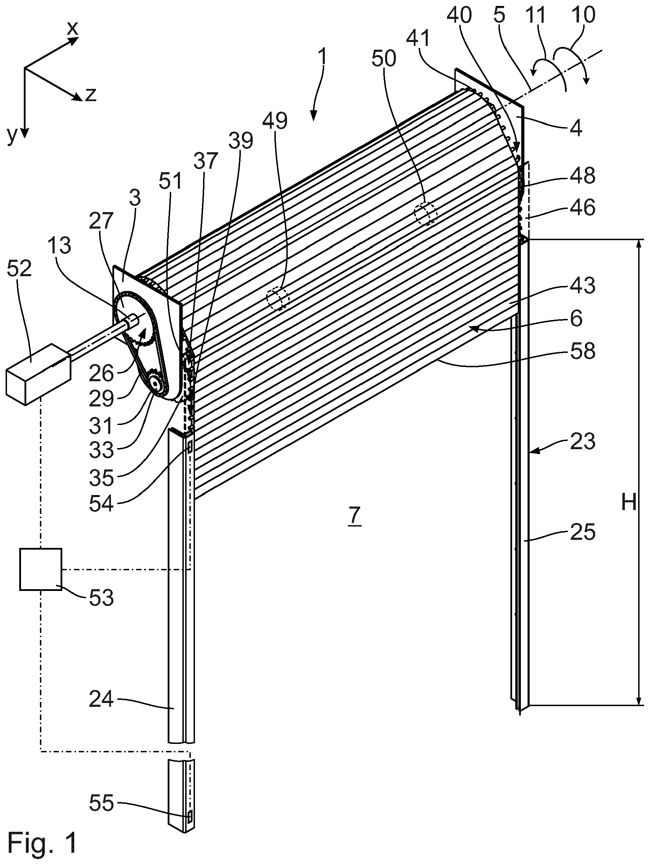

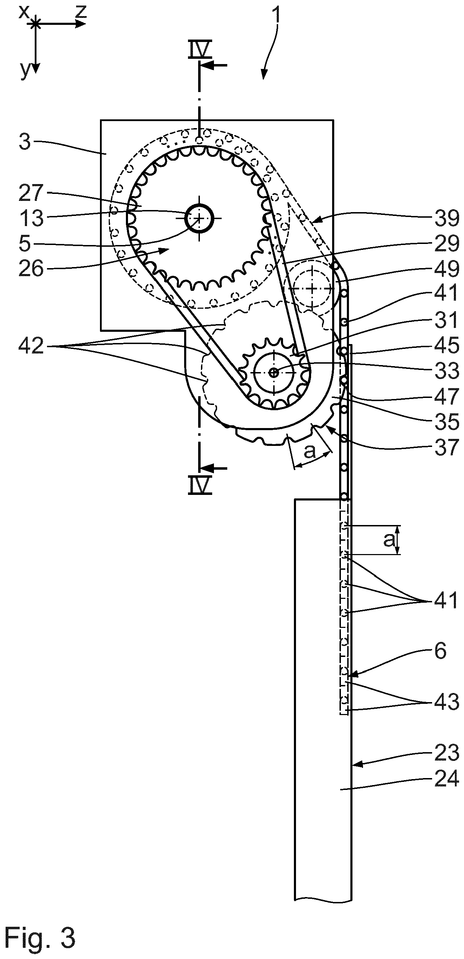

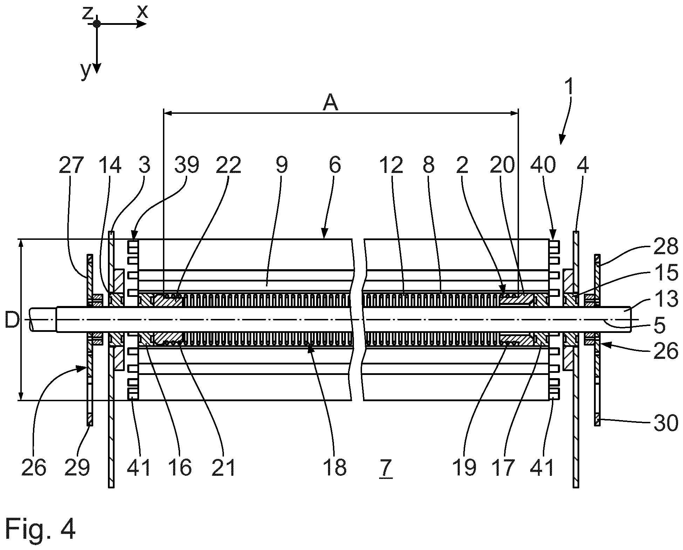

Nachfolgend ist unter Bezugnahme auf die Fig. 1 bis 4 ein erstes Ausführungsbeispiel der Erfindung beschrieben. Eine Abdeckvorrichtung 1 weist eine Wickeleinheit 2 auf, die zwischen zwei Grundkörpern 3, 4 angeordnet ist. Die Wickeleinheit 2 ist an den Grundkörpern 3, 4 um eine Drehachse 5 drehbar gelagert. Die Drehachse 5 erstreckt sich in einer x-Richtung. An der Wickeleinheit 2 ist ein Abdeckelement 6 befestigt, das mittels der Wickeleinheit 2 auf- und abwickelbar ist. Das Abdeckelement 6 dient zum Abdecken einer Öffnung 7. Die abzudeckende Öffnung 7 ist beispielsweise eine Maschinenöffnung. Derartige Maschinenöffnungen sind insbesondere an Produktions- und/oder Werkzeugmaschinen ausgebildet.

Die Wickeleinheit 2 weist einen Wickelkörper 8 auf, an dem das aufwickelbare Abdeckelement 6 mit einem ersten Ende 9 befestigt ist. Zum Abdecken der Öffnung 7 ist der Wickelkörper 8 in einer ersten Drehrichtung 10 um die Drehachse 5 drehbar, so dass das Abdeckelement 6 abgewickelt wird. Demgegenüber ist der Wickelkörper 8 zum Öffnen der Öffnung 7 in einer zweiten Drehrichtung 11 um die Drehachse 5 drehbar, so dass das Abdeckelement 6 aufgewickelt wird.

Der Wickelkörper 8 ist als Hohlzylinder ausgebildet und begrenzt einen Innenraum 12. Durch den Innenraum 12 ist eine Welle 13 geführt, die konzentrisch zu der Drehachse 5 angeordnet ist. Die Welle 13 ist mittels Lagerelementen 14, 15 drehbar an den Grundkörpern 3, 4 gelagert. Weiterhin ist die Welle 13 mittels Lagerelementen 16, 17 drehbar an dem Wickelkörper 8 gelagert, so dass der Wickelkörper 8 und die Welle 13 relativ zueinander verschwenkbar bzw. verdrehbar sind.

Zum Erzeugen einer auf den Wickelkörper 8 wirkenden Vorspannkraft F ist in dem Innenraum 12 ein Federelement 18 angeordnet. Das Federelement 18 ist als Schraubenfeder ausgebildet und im Wesentlichen koaxial zu der Drehachse 5 angeordnet. Das Federelement 18 ist mit einem ersten Federende 19 an einem Lager 20 gelagert, das fest mit der Innenseite des Wickelkörpers 8 verbunden ist. Demgegenüber ist ein zweites Federende 21 des Federelements 18 an einem Gegenlager 22 gelagert, das fest mit der Welle 13 verbunden ist. Das Gegenlager 22 ist somit relativ zu dem Lager 20 um die Drehachse 5 drehbar.

Das Abdeckelement 6 ist als Gliederschürze ausgebildet und weist eine Vielzahl von Gliedern 43 auf, die gelenkig miteinander verbunden sind. Die Glieder 43 erstrecken sich in der x-Richtung, so dass die Gliederschürze sich entlang der x-Richtung und einer senkrecht dazu verlaufenden y-Richtung erstreckt. Das Abdeckelement 6 ist in einer Führung 23 geführt, die zwei im Querschnitt U-förmige Führungsschienen 24, 25 umfasst. Die Führungsschienen 24, 25 sind in einer senkrecht zu der x- und y-Richtung verlaufenden z-Richtung beabstandet von der Drehachse 5 angeordnet und erstrecken sich in der y-Richtung.

Zur Kopplung der Drehbewegung der Welle 13 und der Auf- und Abwickelbewegung des Abdeckelements 6 weist die Abdeckvorrichtung 1 eine Kopplungsmechanik 26 auf. Die Kopplungsmechanik 26 umfasst zwei erste Profilräder 27, 28, die beidseitig der Grundkörper 3, 4 drehfest an der Welle 13 angeordnet sind. Die ersten Profilräder 27, 28 sind mittels zugehörigen Endloskoppelelementen 29, 30 mit zweiten Profilrädern 31, 32 gekoppelt, die entsprechend den ersten Profilrädern 27, 28 beidseitig an den Grundkörpern 3, 4 angeordnet sind. Die Profilräder 27, 28 und 31, 32 sind als Zahnräder ausgebildet. Die Endloskoppelelemente 29, 30 sind als Ketten ausgebildet. Die zweiten Profilräder 31, 32 sind mittels zugehörigen Wellen 33, 34 mit Koppelrädern 35, 36 drehfest verbunden. Die Koppelräder 35, 36 sind an dem Abdeckelement 6 zugewandten Seiten der Grundkörper 3, 4 angeordnet. Die Welle 13 und die Koppelräder 35, 36 sind auf diese Weise miteinander gekoppelt.

Die Koppelräder 35, 36 weisen umfangsseitig jeweils ein Profil 37, 38 auf, das jeweils in ein zugehöriges Gegenprofil 39, 40 eingreift. Die Gegenprofile 39, 40 sind in x-Richtung endseitig an dem Abdeckelement 6, also an beiden Stirnseiten des Abdeckelements 6, angeordnet.

Die Gegenprofile 39, 40 sind durch einzelne Gegenprofilelemente 41 gebildet, die stift- bzw. bolzenartig ausgebildet sind. Die Gegenprofilelemente 41 sind in x-Richtung seitlich an dem Abdeckelement 6 angeordnet und stehen somit in x-Richtung über das Abdeckelement 6 über. Die Gegenprofilelemente 41 weisen paarweise gleiche Abstände a voneinander auf, wobei umfangsseitig an den Koppelrädern 35, 36 entsprechend beabstandete Ausnehmungen 42 ausgebildet sind, die das jeweilige Profil 37, 38 bilden. Die Gegenprofilelemente 41 sind stirnseitig an beiden Seiten jedes Gliedes 43 befestigt. Hierzu sind die Gegenprofilelemente 41 in einen stirnseitig offenen Hohlraum 44 jedes Gliedes 43 eingesteckt und dort befestigt.

Zur Sicherung des Eingriffs des jeweiligen Profils 37, 38 und des zugehörigen Gegenprofils 39, 40 sind den Koppelrädern 35, 36 Gegenhalter 45, 46 zugeordnet. Die Gegenhalter 45, 46 bilden zusammen mit dem zugehörigen Koppelrad 35, 36 einen Spalt 47, 48 aus, durch den die Gegenprofilelemente 41 mit geringem Spiel geführt sind. Die Gegenhalter 45, 46 sind an den Führungsschienen 24, 25 angeordnet und erstrecken sich zur Ausbildung des jeweiligen Spalts 47, 48 in Richtung der Koppelräder 35, 36. Die Gegenhalter 45, 46 sichern somit die Gegenprofilelemente 41 in den zugehörigen Ausnehmungen 42 der Koppelräder 35, 36.

Die Gegenprofilelemente 41 dienen zudem als Gleitelemente und/oder Rollelemente und/oder Führungselemente für die Bewegung des Abdeckelements 6 in der Führung 23. Hierzu sind die Gegenprofilelemente 41 in den U-förmigen Führungsschienen 24, 25 geführt. Die Gegenprofilelemente 41 sind beispielsweise aus Kunststoff und/oder Metall. Dies ermöglicht eine reibungsarme Führung.

Zum Umlenken des Abdeckelements 6 parallel zu den Führungsschienen 24, 25 sind zwischen den Grundkörpern 3, 4 zwei Umlenkrollen 49, 50 angeordnet. Die Umlenkrollen 49, 50 sind an einem Träger 51 drehbar gelagert, der an den Grundkörpern 3, 4 befestigt ist.

Zum Drehantreiben der Profilräder 27, 28 ist ein elektrischer Antriebsmotor 52 mit der Welle 13 gekoppelt. Zum Steuern des Antriebsmotors 52 ist dieser mit einer Steuereinheit 53 in Signalverbindung, die wiederum mit zwei Endschaltern 54, 55 verbunden ist. Die Endschalter 54, 55 sind endseitig der Führung 23 angeordnet.

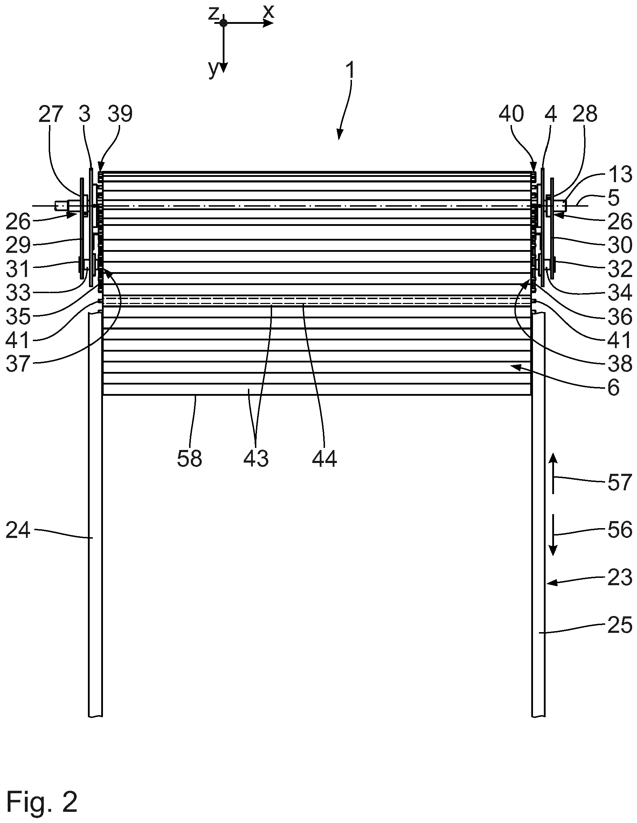

Die Funktionsweise der Abdeckvorrichtung 1 ist wie folgt:
Die Öffnung 7 ist, wie in den Fig. 1 und 2 dargestellt ist, zunächst offen und soll abgedeckt werden. Hierzu wird der Antriebsmotor 52 derart angetrieben, dass die Welle 13 in der Drehrichtung 10 gedreht wird. Über die Profilräder 27, 28 wird die Drehbewegung der Welle 13 auf die Endloskoppelelemente 29, 30 übertragen, die wiederum ihre Bewegung auf die Profilräder 31, 32 übertragen. Die Koppelräder 35, 36 werden mittels der Profilräder 31, 32 über die Wellen 33, 34 drehangetrieben. Dadurch, dass das Profil 37, 38 der Koppelräder 35, 36 in Eingriff mit dem zugehörigen Gegenprofil 39, 40 ist, wird das Abdeckelement 6 in einer Abdeckrichtung 56 bewegt. Die Drehbewegung der Welle 13 wird somit mittels der Kopplungsmechanik 26 in eine Linearbewegung bzw. Abwickelbewegung des Abdeckelements 6 umgewandelt.

Während des Abwickelns sind die Gegenprofilelemente 41 in Eingriff mit den zugehörigen Ausnehmungen 42. Die Gegenhalter 45, 46 verhindern, dass sich die Gegenprofilelemente 41 in Folge der auf das Abdeckelement 6 wirkenden Kraft aus den Ausnehmungen 42 bewegen. Das Abdeckelement 6 wird durch die Drehbewegung der Koppelräder 35, 36 entlang der Führungsschienen 24, 25 bewegt, bis ein freies zweites Ende 58 des Abdeckelements 6 den Endschalter 55 erreicht und die Steuereinheit 53 den Antriebsmotor 52 stoppt. Da die Gegenprofilelemente 41 als Gleitelemente ausgebildet sind, gleiten diese reibungsarm in den Führungsschienen 24, 25. Während des Abdeckens der Öffnung 7 wird das Abdeckelement 6 somit ausgehend von den Koppelrädern 35, 36 geschoben. Durch die Ausbildung als Gliederschürze ist das Abdeckelement 6 für eine schiebende Bewegung ausreichend eigenstabil.

Während des Abdeckens der Öffnung 7 wird das Abdeckelement 6 von dem Wickelkörper 8 abgewickelt. Hierdurch wird der Wickelkörper 8 in der Drehrichtung 10 um die Drehachse 5 gedreht und ein Wickeldurchmesser D des Abdeckelements 6 verringert. Diese Drehbewegung wird über das Lager 20 auf das erste Federende 19 übertragen, so dass das erste Federende 19 ebenfalls im die Drehachse 5 gedreht wird. Da das Gegenlager 22 fest mit der Welle 13 verbunden ist, wird beim Abdecken der Öffnung 7 gleichzeitig das Gegenlager 22 in der Drehrichtung 10 um die Drehachse 5 gedreht. Das Übersetzungsverhältnis der Kopplungsmechanik 26 ist hierbei derart ausgelegt, dass sich das Lager 20 bzw. der Wickelkörper 8 und das Gegenlager 22 bzw. die Welle 13 im Wesentlichen synchron um die Drehachse 5 drehen. Das bedeutet, dass bei einer Drehung des Lagers 20 im Wesentlichen auch eine Drehung des Gegenlagers 22 erfolgt. Abweichungen hiervon ergeben sich lediglich aufgrund des Wickeldurchmessers D des Abdeckelements 6 auf dem Wickelkörper 8, da sich dieser im Verlauf des Abwickelns zunehmend verringert. Durch die Drehung des Gegenlagers 22 um die Drehachse 5 wird das Federelement 18 ungefähr in dem Maße entspannt, wie es durch die Drehung des Lagers 20 um die Drehachse 5 gespannt wird. Somit kann die Vorspannkraft F, die bei der Montage der Abdeckvorrichtung 1 definiert eingestellt wird, im Wesentlichen konstant gehalten werden. Das auf Torsion vorgespannte Federelement 18 wird somit im Wesentlichen gleichmäßig belastet, so dass ein Ermüdungsbruch verhindert bzw. deutlich hinausgezögert wird. Weiterhin kann ein Abdeckhub H der Abdeckvorrichtung 1 im Wesentlichen unabhängig von einer Abmessung A des Federelements 18 in der x-Richtung dimensioniert werden, da die Vorspannkraft F bzw. die Belastung des Federelements 18 unabhängig vom Abdeckhub H im Wesentlichen konstant bleibt. Die erfindungsgemäße Abdeckvorrichtung 1 ist somit einfach und robust aufgebaut.

Da die Koppelräder 35, 36 benachbart zu der Wickeleinheit 2 zwischen der Wickeleinheit 2 und den Führungsschienen 24, 25 bzw. der Führung 23 angeordnet sind, ist mittels der Endloskoppelelemente 29, 30 nur ein geringer Abstand zwischen den Profilrädern 27 und 31 bzw. 28 und 32 zu überwinden. Dadurch, dass die Gegenprofile 39, 40 an dem Abdeckelement 6 angeordnet sind, ist die Kopplungsmechanik 26 direkt an dem Abdeckelement 6 ausgebildet bzw. angeordnet, so dass die Kopplungsmechanik 26 vergleichsweise einfach und robust bzw. zuverlässig aufgebaut ist. Insbesondere kann vermieden werden, dass Endloskoppelelemente entlang der gesamten Führung verlaufen müssen, wie dies bei der Abdeckvorrichtung gemäß der DE 10 2012 200 042 A1 der Fall ist. Der Aufbau der Kopplungsmechanik 26 ist somit unabhängig vom Abdeckhub H.

Zum Öffnen der Öffnung 7 wird der Antriebsmotor 52 in der Drehrichtung 11 drehangetrieben. Die Profilräder 27, 28 übertragen diese Drehbewegung auf die Endloskoppelelemente 29, 30, die wiederum die Profilelemente 31, 32 drehantreiben. Die Koppelräder 35, 36 werden mittels der Wellen 33, 34 von den Profilrädern 31, 32 drehangetrieben, wobei die Koppelräder 35, 36 aufgrund des beschriebenen Eingriffs der Profile 37, 38 in die zugehörigen Gegenprofile 39, 40 das Abdeckelement 6 in einer Öffnungsrichtung 57 verlagern. Die Gegenprofilelemente 41 gleiten in den Führungsschienen 24, 25, bis das Abdeckelement 6 den Endschalter 54 betätigt und die Steuereinheit 53 den Antriebsmotor 52 stoppt. Durch die Vorspannkraft F und die ziehende Bewegung wird das Abdeckelement 6 während des Öffnens bzw. des Aufwickelns unter Zug gehalten. Die Vorspannkraft F und damit die Belastung des Federelements 18 bleibt während des Aufwickelns im Wesentlichen konstant, da das Gegenlager 22 im Wesentlichen synchron zu dem Lager 20 um die Drehachse 5 gedreht wird. Die Endschalter 54 und/oder 55 können auch entfallen, wenn der Antriebsmotor 52 entsprechend von der Steuereinheit 53 angesteuert wird.

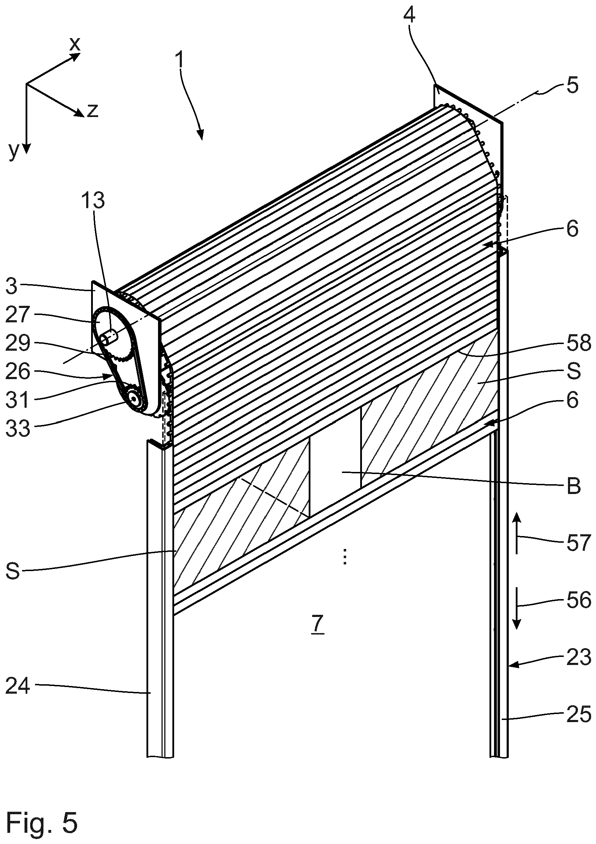

Nachfolgend ist unter Bezugnahme auf Fig. 5 ein zweites Ausführungsbeispiel der Erfindung beschrieben. Die Abdeckvorrichtung 1 weist im Unterschied zu dem ersten Ausführungsbeispiel keinen eigenen Antriebsmotor auf. Das Abdeckelement 6 ist mit dem freien Ende 58 an einem Bauteil B einer nicht näher dargestellten Maschine befestigt, wobei das Bauteil B mittels eines Antriebsmotors der Maschine in der y-Richtung linear verfahrbar ist. Das Bauteil B ist beispielsweise eine Werkzeugspindel einer Werkzeugmaschine. Die Werkzeugmaschine ist nicht näher dargestellt. Bei einer Bewegung des Bauteils B in der Abdeckrichtung 56 wird das Abdeckelement 6 gezogen, wobei die Kopplungsmechanik 26 in der beschriebenen Weise das Gegenlager 22 im Wesentlichen synchron zu dem Lager 20 um die Drehachse 5 dreht und die Belastung des Federelements 18 im Wesentlichen konstant bleibt. Bei einer Bewegung des Bauteils B in der Öffnungsrichtung 57 wird das Abdeckelement 6 geschoben und das Gegenlager 22 mittels der Kopplungsmechanik 26 im Wesentlichen synchron zu dem Lager 20 um die Drehachse 5 gedreht. Die Kopplungsmechanik 26 kann insbesondere auch nur ein Koppelrad 35 mit einem Profil 37 und einem zugehörigen Gegenprofil 39 aufweisen.

Zur vollständigen Abdeckung der Öffnung 7 kann die Abdeckvorrichtung 1 symmetrisch zu dem Bauteil B aufgebaut sein und eine weitere Wickeleinheit 2 mit einem zugehörigen Abdeckelement 6 aufweisen, die an Grundkörpern 3, 4 angeordnet ist und eine Kopplungsmechanik 26 aufweist. Dies ist in Fig. 5 lediglich angedeutet. Weiterhin kann die Abdeckvorrichtung 1 in der x-Richtung seitlich neben dem Bauteil B Seitenabdeckungen S aufweisen, die insbesondere in der x-Richtung in ihrer Länge veränderbar sind. Hierdurch ist eine Bewegung des Bauteils B in der x-Richtung gewährleistet. Hinsichtlich des weiteren Aufbaus und der weiteren Funktionsweise der Abdeckvorrichtung 1 wird auf das vorangegangene Ausführungsbeispiel verwiesen.

## Patentansprüche

1. Abdeckvorrichtung für Öffnungen, insbesondere für Maschinenöffnungen, umfassend
- eine Wickeleinheit (2) mit
-- einer um eine Drehachse (5) drehbaren Welle (13),
-- einem um die Drehachse (5) drehbaren Wickelkörper (8),
-- einem Federelement (18) zum Erzeugen einer zwischen der Welle (13) und dem Wickelkörper (8) wirkenden Vorspannkraft (F), wobei das Federelement (18) mit einem ersten Federende (19) an dem Wickelkörper (8) und mit einem zweiten Federende (21) an der Welle (13) gelagert ist,
- ein Abdeckelement (6) zum Abdecken einer Öffnung (7), das
-- zum Öffnen der Öffnung (7) auf den Wickelkörper (8) aufwickelbar und
-- zum Abdecken der Öffnung (7) von dem Wickelkörper (8) abwickelbar ist,
- eine Kopplungsmechanik (26) zur Kopplung einer Bewegung des Abdeckelements (6) mit einer Drehbewegung der Welle (13),
**dadurch gekennzeichnet,**
**dass** die Kopplungsmechanik (26) mindestens ein mit der Welle (13) gekoppeltes Koppelrad (35, 36) aufweist, und
**dass** ein Profil (37, 38) des mindestens einen Koppelrads (35, 36) in Eingriff mit einem an dem Abdeckelement (6) angeordneten Gegenprofil (39, 40) ist.

2. Abdeckvorrichtung nach Anspruch 1, **dadurch gekennzeichnet,**
**dass** das Gegenprofil (39, 40) durch einzelne Gegenprofilelemente (41) gebildet ist, die insbesondere stiftartig ausgebildet sind.

3. Abdeckvorrichtung nach Anspruch 1 oder 2, **dadurch gekennzeichnet,**
**dass** das Abdeckelement (6) als Gliederschürze mit mehreren gelenkig miteinander verbundenen Gliedern (43) ausgebildet ist und das Gegenprofil (39, 40), insbesondere die Gegenprofilelemente (41), an den Gliedern (43) angeordnet ist.

4. Abdeckvorrichtung nach Anspruch 2 oder 3, **dadurch gekennzeichnet,**
**dass** die Gegenprofilelemente (41) seitlich an dem Abdeckelement (6), insbesondere stirnseitig an den Gliedern (43), angeordnet sind.

5. Abdeckvorrichtung nach einem der Ansprüche 1 bis 4, **dadurch gekennzeichnet,**
**dass** zur Sicherung des Eingriffs von Profil (37, 38) und Gegenprofil (39, 40) dem mindestens einen Koppelrad (35, 36) ein Gegenhalter (45, 46) zugeordnet ist.

6. Abdeckvorrichtung nach einem der Ansprüche 2 bis 5, **dadurch gekennzeichnet,**
**dass** die Gegenprofilelemente (41) als Gleitelemente und/oder Rollelemente und/oder Führungselemente ausgebildet sind.

7. Abdeckvorrichtung nach einem der Ansprüche 2 bis 6, **dadurch gekennzeichnet,**
**dass** die Gegenprofilelemente (41) in einer Führung (23) geführt sind.

8. Abdeckvorrichtung nach einem der Ansprüche 1 bis 7, **dadurch gekennzeichnet,**
**dass** die Welle (13) mit einem ersten Profilrad (27, 28) und das mindestens eine Koppelrad (35, 36) mit einem zweiten Profilrad (31, 32) drehfest verbunden ist und
**dass** die Profilräder (27, 31 und 28, 32) durch ein Endloskoppelelement (29, 30) gekoppelt sind.

9. Abdeckvorrichtung nach einem der Ansprüche 1 bis 8, **dadurch gekennzeichnet,**
**dass** die Kopplungsmechanik (26) zwei beidseitig des Abdeckelements (6) angeordnete Koppelräder (35, 36) aufweist,
**dass** das jeweilige Profil (37, 38) der Koppelräder (35, 36) in Eingriff mit dem zugehörigen und an dem Abdeckelement (6) angeordneten Gegenprofil (39, 40) ist.

10. Abdeckvorrichtung nach einem der Ansprüche 1 bis 9, **dadurch gekennzeichnet,**
**dass** ein Lager (20) an dem Wickelkörper (8) und ein Gegenlager (22) an der Welle (13) drehfest angeordnet sind,
**dass** das erste Federende (19) an dem Lager (20) und das zweite Federende (21) an dem Gegenlager (22) angeordnet sind.

11. Abdeckvorrichtung nach einem der Ansprüche 1 bis 10, **dadurch gekennzeichnet,**
**dass** das Federelement (18) innerhalb des Wickelkörpers (8) angeordnet ist und, insbesondere als Schraubenfeder ausgebildet ist.

12. Abdeckvorrichtung nach einem der Ansprüche 1 bis 11, **dadurch gekennzeichnet,**
**dass** die Kopplungsmechanik (26) mittels eines Antriebsmotors (52) antreibbar ist, wobei der Antriebsmotor (52) insbesondere mit der Welle (13) gekoppelt ist.

## Claims

1. Covering device for openings, in particular for machine openings, comprising
- a winding unit (2) with
-- a shaft (13) that is rotatable about a rotational axis (5),
-- a winding body (8) that is rotatable about the rotational axis (5),
-- a spring element (18) for producing a prestressing force (F) acting between the shaft (13) and the winding body (8), wherein the spring element (18) is mounted by a first spring end (19) on the winding body (18) and by a second spring end (21) on the shaft (13),
- a covering element (6) to cover an opening (7), which
-- to open the opening (7) is windable onto the winding body (8) and
-- to cover the opening (7) is unwindable from the winding body (8),
- a coupling mechanism (26) for coupling a movement of the covering element (6) to a rotational movement of the shaft (13),
**characterised**
**in that** the coupling mechanism (26) has at least one coupling wheel (35, 36) coupled to the shaft (13), and
**in that** a profile (37, 38) of the at least one coupling wheel (35, 36) is engaged with a counter-profile (39, 40) arranged on the covering element (6).

2. Covering device according to claim 1, **characterised in that** the counter-profile (39, 40) is formed by individual counter-profile elements (41), which are configured, in particular, in the manner of a pin.

3. Covering device according to claim 1 or 2, **characterised in that** the covering element (6) is configured as a link apron with a plurality of links (43) connected to one another in an articulated manner and the counter-profile (39, 40), in particular the counter-profile elements (41), is arranged on the links (43).

4. Covering device according to claim 2 or 3, **characterised in that** the counter-profile elements (41) are arranged laterally on the covering element (6), in particular on the end face of the links (43).

5. Covering device according to any one of claims 1 to 4, **characterised in that** to secure the engagement of the profile (37, 38) and counter-profile (39, 40), a counter-holder (45, 46) is associated with the at least one coupling wheel (35, 36).

6. Covering device according to any one of claims 2 to 5, **characterised in that** the counter-profile elements (41) are configured as sliding elements and/or rolling elements and/or guide elements.

7. Covering device according to any one of claims 2 to 6, **characterised in that** the counter-profile elements (41) are guided in a guide (23).

8. Covering device according to any one of claims 1 to 7, **characterised in that** the shaft (13) is non-rotatably connected to a first profile wheel (27, 28) and the at least one coupling wheel (35, 36) is non-rotatably connected to a second profile wheel (31, 32) and
**in that** the profile wheels (27, 31 and 28, 32) are coupled by a continuous coupling element (29, 30).

9. Covering device according to any one of claims 1 to 8, **characterised in that** the coupling mechanism (26) has two coupling wheels (35, 36) arranged on both sides of the covering element (6),
**in that** the respective profile (37, 38) of the coupling wheels (35, 36) is engaged with the associated counter-profile (39, 40) arranged on the covering element (6).

10. Covering device according to any one of claims 1 to 9, **characterised in that** a bearing (20) is non-rotatably arranged on the winding body (8) and a counter-bearing (22) is non-rotatably arranged on the shaft (13),
**in that** the first spring end (19) is arranged on the bearing (20) and the second spring end (21) is arranged on the counter-bearing (22).

11. Covering device according to any one of claims 1 to 10, **characterised in that** the spring element (18) is arranged within the winding body (8) and, in particular, is configured as a helical spring.

12. Covering device according to any one of claims 1 to 11, **characterised in that** the coupling mechanism (26) is drivable by means of a drive motor (52), the drive motor (52) in particular being coupled to the shaft (13).

## Revendications

1. Dispositif de recouvrement pour ouvertures, en particulier pour ouvertures de machine, comprenant
- une unité d'enroulement (2) comportant
-- un arbre (13) pouvant tourner autour d'un axe de rotation (5),
-- un corps d'enroulement (8) pouvant tourner autour de l'axe de rotation (5),
-- un élément ressort (18) destiné à produire une force de précontrainte (F) agissant entre l'arbre (13) et le corps d'enroulement (8), dans lequel l'élément ressort (18) est monté par une première extrémité de ressort (19) sur le corps d'enroulement (8) et par une deuxième extrémité de ressort (21) sur l'arbre (13),
- un élément de recouvrement (6) destiné à recouvrir une ouverture (7), qui
-- peut être enroulé sur le corps d'enroulement (8) pour découvrir l'ouverture (7) et
-- peut être déroulé du corps d'enroulement (8) pour recouvrir l'ouverture (7),
- un mécanisme d'accouplement (26) destiné à accoupler un mouvement de l'élément de recouvrement (6) à un mouvement rotatif de l'arbre (13),
**caractérisé**
**en ce que** le mécanisme d'accouplement (26) comprend au moins une roue d'accouplement (35, 36) accouplée à l'arbre (13), et
**en ce qu'**un profilé (37, 38) de ladite au moins une roue d'accouplement (35, 36) est en prise avec un profilé complémentaire (39, 40) agencé sur l'élément de recouvrement (6).

2. Dispositif de recouvrement selon la revendication 1, **caractérisé**
**en ce que** le profilé complémentaire (39, 40) est formé par différents éléments de profilé complémentaire (41), qui sont en particulier en forme de tige.

3. Dispositif de recouvrement selon la revendication 1 ou 2, **caractérisé**
**en ce que** l'élément de recouvrement (6) est réalisé sous la forme d'un tablier articulé comprenant plusieurs maillons (43) reliés les uns aux autres de manière articulée et le profilé complémentaire (39, 40), en particulier les éléments de profilé complémentaire (41), est agencé sur les maillons (43).

4. Dispositif de recouvrement selon la revendication 2 ou 3, **caractérisé**
**en ce que** les éléments de profilé complémentaire (41) sont agencés latéralement sur l'élément de recouvrement (6), en particulier frontalement sur les maillons (43).

5. Dispositif de recouvrement selon l'une quelconque des revendications 1 à 4, **caractérisé**
**en ce que**, pour bloquer la mise en prise entre le profilé (37, 38) et le profilé complémentaire (39, 40), un contre-support (45, 46) est associé à ladite au moins une roue d'accouplement (35, 36).

6. Dispositif de recouvrement selon l'une quelconque des revendications 2 à 5, **caractérisé**
**en ce que** les éléments de profilé complémentaire (41) sont réalisés sous la forme d'éléments coulissants et/ou d'éléments roulants et/ou d'éléments de guidage.

7. Dispositif de recouvrement selon l'une quelconque des revendications 2 à 6, **caractérisé**
**en ce que** les éléments de profilé complémentaire (41) sont guidés dans un guidage (23).

8. Dispositif de recouvrement selon l'une quelconque des revendications 1 à 7, **caractérisé**
**en ce que** l'arbre (13) est relié de manière solidaire en rotation à une première roue profilée (27, 28) et ladite au moins une roue d'accouplement (35, 36) est reliée de manière solidaire en rotation à une deuxième roue profilée (31, 32) et
**en ce que** les roues profilées (27, 31 et 28, 32) sont accouplées par un élément d'accouplement sans fin (29, 30).

9. Dispositif de recouvrement selon l'une quelconque des revendications 1 à 8, **caractérisé**
**en ce que** le mécanisme d'accouplement (26) comprend deux roues d'accouplement (35, 36) agencées de part et d'autre de l'élément de recouvrement (6),
**en ce que** le profilé (37, 38) respectif des roues d'accouplement (35, 36) est en prise avec le profilé complémentaire (39, 40) associé et agencé sur l'élément de recouvrement (6).

10. Dispositif de recouvrement selon l'une quelconque des revendications 1 à 9, **caractérisé**
**en ce qu'**un palier (20) est agencé de manière solidaire en rotation sur le corps d'enroulement (8) et un palier complémentaire (22) est agencé de manière solidaire en rotation sur l'arbre (13),
**en ce que** la première extrémité de ressort (19) est agencée sur le palier (20) et la deuxième extrémité de ressort (21) est agencée sur le palier complémentaire (22).

11. Dispositif de recouvrement selon l'une quelconque des revendications 1 à 10, **caractérisé**
**en ce que** l'élément ressort (18) est agencé à l'intérieur du corps d'enroulement (8) et est réalisé en particulier sous la forme d'un ressort hélicoïdal.

12. Dispositif de recouvrement selon l'une quelconque des revendications 1 à 11, **caractérisé**
**en ce que** le mécanisme d'accouplement (26) peut être entraîné au moyen d'un moteur d'entraînement (52), dans lequel le moteur d'entraînement (52) est accouplé en particulier à l'arbre (13).
